# EUROPEAN PATENT SPECIFICATION

(11) **EP 3 832 999 B1**
(45) Date of publication and mention of the grant of the patent: **07.06.2023**
(21) Application number: 20211947.5
(22) Date of filing: 04.12.2020
(51) Int. Cl.: H04N 5/225, H04N 5/33, G03B 17/17, G01J 3/28, G01J 5/0803, G01J 5/0806, G01J 5/10, G01J 5/60

(54) **MULTI-SPECTRAL THERMAL IMAGING PAYLOAD**
MULTISPEKTRALE THERMISCHE ABBILDUNGSNUTZLAST
CHARGE UTILE D'IMAGERIE THERMIQUE MULTISPECTRALE

(30) Priority: 04.12.2019 LU 101517
(43) Date of publication of application: 09.06.2021
(73) Proprietor: OroraTech GmbH, 81669 München (DE)
(72) Inventor: SHAH, Sanket Bharat, 81677 München (DE); KREMPEL, Lucas, 80992 München (DE); ERNST, Sven, 80992 München (DE)
(74) Representative: MERH-IP Matias Erny Reichl Hoffmann Patentanwälte PartG mbB

(56) References cited:
- EP-A2- 0 723 174
- US-A1- 2008 019 684
- US-A1- 2011 002 505
- US-A1- 2013 063 629

## Description

### Technical Field

This application generally relates to thermal imagers, such as infrared (IR) cameras, for example. In particular, this application relates to solid state multi-spectral thermal imagers that are typically suitable for use as a compact payload (e.g., as a camera) for satellites (e.g., nanosatellites, such as CubeSats), or drones (or unmanned aerial vehicles, UAVs), etc.

### Background

Broadly speaking, all objects above the absolute zero temperature emit electromagnetic radiation as per Planck's law. Ideal black bodies emit 100% radiation as per Planck's law and all bodies emit lesser amount and that factor is called emissivity. Typically, objects at temperatures near room temperature (around 300 K to 400 K) have their peaks (in emission) in 7 µm to 14 µm wavelength range. Hence, most common thermal imagers work in that band (which is also commonly referred to as Long-Wave InfraRed, LWIR). Correspondingly, hotter objects have their emission peaks in shorter wavelengths. In general, objects between 600 K and 900 K have their peaks in 3 µm to 5 µm, referred to as Mid-Wave IR MWIR radiation. Thermal infrared (TIR) is radiation in wavelength 3 µm to 14 µm with MWIR and LWIR as the two important bands. Notably, LWIR and MWIR are the most relevant TIR bands as they are where Earth's atmosphere allows infrared radiation to transmit with least absorption. Also, emissivity of objects varies with the wavelength, which affects the reliability of thermal data from LWIR or MWIR alone.

Beam-splitters are usually plates or cubes for dividing a beam of light in two (or sometime more than two) parts, with possible control over intensity distribution. Also, dichroic beam-splitters are available that filter spectrally, but highly limited by materials and manufacturability.

In general, MWIR is good for detecting very hot objects while LWIR is ideal for estimating temperatures near room temperature, as illustrated above. By using both bands, a single imager can achieve a vastly improved dynamic range compared to using only one of them. In order to successfully achieve this, the imaging system (e.g., the thermal imager) must sample the entire object over several bands. However, such sampling is generally not easily feasible due to several problems, such as detector pixels being too large, object or camera components being required to move to scan the whole object, etc. Hence, conventionally these problems often require the imager to be a large and complex system with several moving parts or severely compromise the image quality. Further, a single beam-splitter typically does not do the job effectively as it limits the image to two bands.

Thus, there is a need for an improved multi-spectral thermal imager. Particularly, there is a need for simple and compact design for multi-spectral thermal imagers.

US 2013/063629 A1 generally discloses a digital camera component that has a light splitter cube having an entrance face to receive incident light from a camera scene. The cube splits the incident light into first, second, and third color components that emerge from the cube through a first face, a second face, and a third face of the cube, respectively. First, second, and third image sensors are provided, each being positioned to receive a respective one of the color components that emerge from the first, second, and third faces of the cube.

EP 0 723 174 A2 generally relates to a three prism color separator, and more particularly pertains to a color separator using three joined prisms for color separation in projection displays.

### Summary

In view of some or all of these needs and/or problems, the present invention proposes an imaging system, an apparatus comprising an imaging system, and a method for manufacturing an imaging system, having the features of the respective independent claims. The dependent claims relate to preferred embodiments.

An example of the disclosure relates to an imaging system. The imaging system may be a (thermal) imager that is suitable for use as a payload (e.g., as a camera) for satellites (e.g., nanosatellites, such as CubeSats), or drones (or unmanned aerial vehicles, UAVs), etc. The imaging system may comprise a beam splitting assembly for splitting an incident ray (of light) into (a plurality of) emergent rays of light (after exiting the beam splitting assembly). As will be understood and appreciated by the skilled person, the incident/emergent ray may be or represent a beam of light, for example. In particular, in the present disclosure, the beam splitting assembly may comprise a total number of three prisms, namely a first prism, a second prism and a third prism. As will be understood and appreciated by the skilled person, in colloquial use the term "prism" typically refers to the most common type of triangular prism with a triangular base and rectangular sides, as is generally also the case in the present disclosure (unless indicated otherwise). However, other types (e.g., different shapes of bases) of prisms may also be applicable, in some cases. Each of the first, second and third prisms may be a monolithic prism. In some cases, it may be preferable that the first, second and third prisms may be formed of the same material, such that the prisms can exhibit (substantially) the same optical behavior (e.g., in terms of reflection, refraction). More particularly, one side surface of the first prism (e.g., one of the three rectangular sides of a triangular prism) and one side surface of the second prism may be joined (together) to form a first interface. The side surfaces of the first and second prisms may be joined together for example by gluing (or cementing) with some kind of (transparent) material (e.g., adhesive, resin, cement, or the like), as will be appreciated by the skilled person. In some other cases, the first and second prisms may be simply held in place (e.g., using tapes or any other suitable means) to be joined together. Put differently, the side surfaces of the first and second prisms may be positioned adjacent to each other such that the side surfaces form a beam-splitting interface. As a result, the first interface can be used to pass (a portion of) light through to enter the second prism; or reflect (a portion of) light back to the first prism. The ratio between the reflected light and the transmitted light (sometimes also referred to as the reflectivity index) may depend on the design of the prisms (e.g., the coating and/or the material of the interface) and/or depend on the target applications. For instance, in some cases, the first interface may transmit (pass through) half (i.e., 50%) of light while reflect the rest (50%) light. Similarly, one side surface of the third prism and another side surface of the second prism may also be joined to form a second interface. The second interface may have the same reflectivity index as or a different reflectivity index from that of the first interface, depending on various requirements and/or implementations.

The imaging system may further comprise a detecting assembly (e.g., with one or more detectors). In particular, in the present disclosure the detecting assembly may comprise at least two detectors. However, in some cases, the detecting assembly may require (and thus may comprise) only one detector, depending on the target application(s). More particularly, the two or more detectors may be arranged to each capture a respective one of the emergent rays. That is to say, due to the beam splitting assembly (i.e., the first to third prisms comprised therein), the incident ray (of light) entering the beam splitting assembly may be split into a plurality of (e.g., two) emergent rays (of light) exiting the respective prisms of the beam splitting assembly. Correspondingly, the detectors may be arranged in such a manner that they are able to capture (receive or detect) a respective emergent ray coming out of the respective prism. By way of example, one detector may be arranged to be after (behind) the first prism in order to capture the emergent ray exiting the first prism. In this sense, in some cases, the detecting assembly may comprise a total number of three detectors that are matched with the number of prisms comprised within the imaging system. As can be understood and appreciated by the skilled person, the detectors may be implemented in the form of any suitable optical, image or thermal sensors (detectors), or the like, depending on various requirements and/or target applications. Possible (but non-limiting) examples of such detector may be using CMOS or Micro-bolometer technology, or generally speaking, Focal Plane Array (FPA).

Configured as such, multi-spectral imaging could be accomplished for broad (thermal) spectrum without compromising the image quality and with no moving parts, thereby resulting in a more efficient, innovative and yet compact design of the imaging system that is well suited for the applications like satellites (e.g., nanosatellites, such as CubeSats), or drones, etc. Furthermore, the movement of the satellite or drone itself may be then used to have multi-spectral data of all points, for example by (successively) scanning or sweeping of the objects, as will be understood and appreciated by the skilled person.

In some embodiments, the imaging system may further comprise at least one (e.g., two or three) filtering means. The filtering means may be implemented in the form of bandpass filters, for example. In particular, the at least one filtering means may be arranged (configured) to filter a respective one of the emergent rays. In this sense, the filtering means may be transparent in a wavelength range (a range of wavelengths) of light or thermal radiation and non-transparent in another (one or more) wavelength range(s) of light or thermal radiation. Put differently, the filtering means may allow choosing certain (desired) spectral band(s), by passing through a range of wavelengths of light such that the passed-through light can be captured by the respective detector(s) of the detecting assembly; while blocking (filtering) other range(s) of wavelengths of light. For this purpose, the filtering means may be arranged in front of the respective detector, or to be more precise, between the respective prism of the beam splitting assembly and the respective detector of the detecting assembly.

In some embodiments, the imaging system may comprise at least two filtering means. In particular, the at least two filtering means may be transparent in different wavelength ranges. In other words, one filtering means may be transparent in a certain wavelength range that is different (non-overlapping or in some cases partially overlapping) from that (the wavelength range) of another filtering means. Configured as such, different ranges of wavelengths of light or radiation may be filtered and eventually captured (collected) by the detectors at (essentially) the same time. In other words, optically matched locations of the pixels on different (e.g., two or three) detectors can be achieved (referred to as collocation). Particularly, there may be (at least) two bands of (optical) data received for each pixel, even while the system (e.g., the satellite or the drone) is moving, which is typically the case during practical operation. Thereby, the overall efficiency and image quality of the whole imaging system can be further improved.

In some embodiments, the detecting assembly may comprise a detector that is arranged on the optical axis of the imaging system. As can be understood and appreciated by the skilled person, the optical axis of a system may for example be determined possibly in connection with lenses and/or mirrors comprised within the system, if any. In this case, this detector (i.e., arranged on the optical axis) may also be simply referred to as a central detector.

In some embodiments, a filtering means may be arranged in front of the central detector (e.g., between the second prism and the central detector). In particular, the filtering mean may comprise a first portion and a second portion which may be (physically) non-overlapping. More particularly, the first and second portions may be transparent in different wavelength ranges, similar as illustrated above with regard to the two filtering means having different wavelength ranges. In some cases, the filtering means may not necessarily comprise the first and second portions (on the same filtering means), but may instead comprise a first and second sub-filtering means that may or may not be connected together, as will be understood and appreciated by the skilled person. Configured as such, namely by exploiting the filtering means with portions (or sub-filtering meanings) having different operating wavelength ranges, different (e.g., two) spectrum bands of a pixel may be captured/collected using one detector, during the course of sweeping/scanning of the object, thereby further improving the overall efficiency of the whole system. Of course, more than two (e.g., three) portions or sub-filtering means may be theoretically achievable. However, trade-off(s), such as the increased complexity in manufacturing such filtering means and/or in the configuration or designing of the beam splitting means, may have to be well taken into account.

In some embodiments, (at least) one of the at least two detectors of the detecting assembly may be selected in such a manner that is based on (requirements of) sensitivity in a certain wavelength range. As will be understood and appreciated by the skilled person, such selection of the detector based on the sensitivity requirements in a particular wavelength range may be performed in addition to or as an alternative of the above illustrated provision of the filtering means. That is to say, in some cases, the respective filtering means may not be necessary (and thus may be omitted), if a detector with wavelength sensitivity itself were to be selected.

According to the invention, each of the first, second and third prisms are a 90 degree prism (in some cases may also be referred to as a right angle prism). In particular, the hypotenuse side surfaces of the first and third prisms are joined (connected) to the respective cathetus (sometimes also referred to as leg) side surfaces of the second prism at the first and second interfaces. In other words, one hypotenuse side surface of the first prism is joined to one cathetus side surface of the second prism to form the first interface. Similarly, one hypotenuse side surface of the third prism is joined to the other cathetus side surface of the second prism to form the second interface.

In some embodiments, each of the first, second and third prisms may have apical angles (or sometimes referred to as apex angles) of 45 degrees. In other words, the base of each of the first, second and third (triangular) prisms may form the shape of a isosceles right triangle (or sometimes simply referred to as a 45°-45°-90° triangle). In such cases, the length of the hypotenuse of the base of the second (triangular) prism may be twice the length of the cathetus (leg) of the base of the first or third (triangular) prism. Notably, the length of the sides of the prisms may be as long as the horizontal field of view is supported by the lens assembly and/or the detecting assembly of the imaging system.

Configured as such, i.e., by selecting the 90 degree prisms, or more particularly, with apical angles of 45 degrees, the first, second and third prisms may be arranged (joined together) to form a (rectangular) cuboid (with the bases of the first, second and third prisms together forming a rectangular), thereby improving the compactness and stableness of the beam splitting assembly and at the same time making it relatively easy to manufacture. Correspondingly, it is also beneficial to the configuration and arrangement of the detecting assembly and/or the filtering means, and eventually to the overall performance of the whole imaging system. However, in some other cases, it is possible that the apical angles may not be 45 degrees or even the prisms may not be 90 degree prisms. In those cases, the detectors of the detecting assembly and/or the filtering means may need to be respectively arranged/tuned (e.g., shifted, tilted, etc.), e.g., in order to compensate the different optical characteristics caused by (e.g., the non-uniformity of) the prisms, as will be understood and appreciated by the skilled person.

In some embodiments, the at least two detectors of the detecting assembly may be arranged on respective focal planes of the imaging system, in order to capture the respective one of the emergent rays. In particular, in the cases where 90 degree prisms with 45 degree apical angles were used, generally speaking, the detector(s) may be arranged in parallel with a respective side surface of the respective first, second, or third prism.

In some embodiments, the first and second interfaces may each have a reflectivity index of 50%. That is to say, each of the first and second interfaces may be configured to pass through half (50%) of light while reflect the other half (50%). However, in some cases, a reflectivity index other than 50% may be used; or in some other cases, the first interface may have a reflectivity index different from that of the second interface, as illustrated above.

In some embodiments, at least one of the first, second and third prisms may be or form a dichroic prism. For instance, the first and second prisms combined together may be seen as forming a dichroic prism. As will be understood and appreciated by the skilled person, a dichroic prism typically refers to a prism that can split light into two beams of different wavelengths and is typically constructed with one or more (sub)prisms with dichroic optical coatings at the interface that may selectively reflect or transmit light depending on the light's wavelength. That is, certain interfaces within the prism or formed by (sub-)prisms may act as dichroic filters. In this sense, such a dichroic prism may be seen as playing a role similar to, at least partially, that of a filtering means. Correspondingly, in some cases, the respective filtering means arranged in front of the detector might be omitted, if a dichroic prism were to be used.

In some embodiments, the first, second and third prisms may have (exhibit) the same index of refraction (or sometimes referred to as the refractive index). This may be achieved by for example using the same material to produce the monotonic first, second and third prisms, or any other suitable means, as will be understood and appreciated by the skilled person. Configured as such, i.e., by the monolithic construction/production of the beam splitting assembly, certain problems such as ghosting and spread lines may be reduced significantly.

In some embodiments, the imaging system may further comprise a lens assembly. The lens assembly may be arranged to guide the incident radiation/ray to the beam splitting assembly. The lens assembly may comprise one or more lenses (or sometimes mirrors) arranged on the (common) optical axis of the imaging system. The lens assembly may allow passage of (thermal) radiation in a certain (given) wavelength range. For instance, in the case of applications for MWIR and LWIR as discussed in the present disclosure, the lens assembly may typically operate/work, or in other words, be transparent, in a wavelength range of for example 3 µm to 12 µm. As will be understood and appreciated by the skilled person, for the successful operation of the whole imaging system, the operation wavelength range of the detector(s) in the detecting assembly and possibly the filtering means may also need to be consistent with the operation wavelength range of the lens assembly, i.e., also in a wavelength range of 3 µm to 12 µm in the present example.

Another example of the disclosure relates to an apparatus. The apparatus may comprise the imaging system according to any one of the embodiments as illustrated above.

In some embodiments, the apparatus may be a satellite (such as a CubeSat) or a drone (or UAV), for example. However, in some cases, the apparatus may form (only) part of the satellite or the drone. In some cases, the imaging system may be arranged in such a manner that it faces (e.g., substantially faces downwards) the (to-be-observed) object (pixels). Configured as such, pixels of the object may be successively swept or scanned by fields of view of the (different) detectors in the detecting assembly. Consequently, different spectrum data captured/collected by the detectors may be compared and post-processed if necessary, as will be appreciated by the skilled person. For instance, by analyzing (e.g., calculating) linear combinations of the readout signals from different detectors (that receive/capture radiation in different wavelength ranges), correction in errors caused by e.g., jitter or vibration of the satellite or drone, may be performed (e.g., with the help of software), thereby further improving the quality of the final image. For this purpose, the apparatus (or the satellite or drone) may further comprise suitable circuitry for reading out the data captured by the detecting assembly and/or for further processing (e.g., time synchronization, gain adjustment, and/or digital signal processing, etc.) if necessary.

Another example of the disclosure relates to a method for manufacturing an imaging system. The method may comprise a step of providing a beam splitting assembly comprising a first prism, a second prism and a third prism (such as triangular prisms). In particular, the provision of the beam splitting assembly may comprise (a sub-step of) joining one side surface of the first prism and one side surface of the second prism to form a first interface and (a sub-step of) joining one side surface of the third prism and another side surface of the second prism to form a second interface. The method may also comprise a step of providing a detecting assembly comprising at least two detectors. In addition, the method may comprise a step of arranging the beam splitting assembly for splitting an incident ray into emergent rays. Finally, the method may comprise a step of arranging the at least two detectors for capturing a respective one of the emergent rays.

### Brief Description of the Figures

Example embodiments of the present disclosure are explained below with reference to the accompanying drawings, wherein
**Fig. 1** schematically illustrates an example of an imaging system according to an embodiment of the present disclosure;
**Fig. 2** schematically illustrates an example of an imaging system according to an embodiment of the present disclosure; and
**Fig. 3** is a flowchart schematically illustrating a method of manufacturing an imaging system according to an embodiment of the present disclosure.

### Detailed Description

In the following, example embodiments of the present disclosure will be described with reference to the appended figures. Identical elements in the figures may be indicated by identical (or similar) reference numbers, and repeated description thereof may be omitted for the sake of conciseness.

Generally speaking, conventional ways for implementing multi-spectral (thermal) imagers may typically comprise moving components (e.g., a wheel) which may require precise information about the relative motion of the moving components or may unfortunately compromise or sacrifice system performance (e.g., the image quality).

Broadly speaking, the present disclosure proposes to use an innovative (solid-state) beam-splitter design for enabling a multi-spectral imaging system implementation without compromising the image quality and with no moving parts. The imaging system may then be used as a payload for target applications like a satellite or a drone being able to capture multi-spectral data for all points (pixels) of an object.

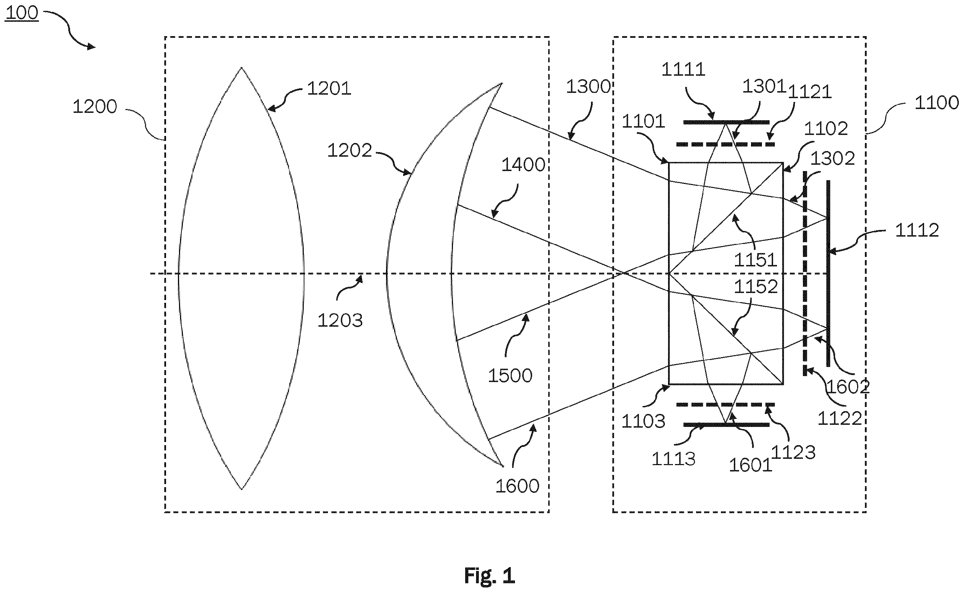

**Fig. 1** schematically illustrates an example of an imaging system 100 according to an embodiment of the present disclosure. To be more precise, **Fig. 1** shows a sectional view of the imaging system 100. The imaging system 100 may be suitable for use as a payload (or forms part thereof) in for example a satellite, an airplane, a drone, an unmanned aerial vehicle, or the like.

In particular, the imaging system 100 comprises a lens assembly 1200. The lens assembly may be a broadband lens assembly (system), for example. In the present example as shown in **Fig. 1****,** the lens assembly 1200 comprises a first lens 1201 and a second lens 1202. However, other suitable numbers or shapes of lenses (or in some cases mirrors) may also be feasible, as will be appreciated by the skilled person. The lens assembly 1200 (or simply the imaging system 100) has an optical axis 1203. Particularly, the lens assembly 1200 works/operates in a certain wavelength range. For instance, in applications of LWIR or MWIR of the present disclosure, this wavelength range may be from 3 µm to 12 µm. In other words, the lens assembly 1200 has an associated wavelength range from 3 µm to 12 µm that may pass through the lens assembly 1200. This may be achieved by for example coating or any other suitable means, as will be understood and appreciated by the skilled person.

The imaging system 100 further comprises a beam splitting assembly. In the present example as shown in **Fig. 1****,** the beam splitting assembly comprises a total number of three (triangular) prisms, namely a first (triangular) prism 1101, a second (triangular) prism 1102 and a third (triangular) prism 1103. Each of the first prism 1101, the second prism 1102 and the third prism 1103 may be a monolithic prism and the first, second and third prisms 1101, 1102, 1103 may be made (produced) using the same material, e.g., for achieving (substantially) the same optical behavior (e.g., in terms of reflection, refraction). However, other types (e.g., different shapes, different materials) of prisms may also be applicable, in some cases.

More particularly, one side surface (for example the hypotenuse side surface) of the first prism 1101 and one side surface (for example one of the cathetus side surfaces) of the second prism 1102 are joined together to form a first interface 1151. The side surfaces of the first and second prisms 1101, 1102 may be joined together for example by gluing (or cementing) with some kind of (transparent) material (e.g., resin, cement, or the like), as will be appreciated by the skilled person. In some other cases, the first and second prisms may be simply held in place (e.g., using tapes, adhesives or any other suitable means) to be joined together. As a result, the first interface 1151 can be used to pass (a portion/wavelength range of) light or radiation through the first prism 1101 to enter the second prism 1102; and reflect (a portion of) light or radiation back to the first prism 1101. The ratio between the passed-through light and the reflected light (sometimes also referred to as the reflectivity index) may depend on the design of the prisms (e.g., the coating and/or the material of the interface) and/or depend on the target applications. For instance, in some cases, the first interface 1151 may transmit (pass through) half (i.e., 50%) of light while reflect the rest (50%) light. Similarly, one side surface (for example the hypotenuse side surface) of the third prism 1103 and another side surface (for example another one of the cathetus side surfaces) of the second prism 1102 can also be joined to form a second interface 1152. The second interface 1152 may have the same reflectivity index as or a different reflectivity index from that of the first interface 1151, depending on various requirements and/or implementations.

Arranged as such, the beam splitting assembly is capable of splitting an incident ray (of light) into (a plurality of) emergent rays of light (after exiting the beam splitting assembly). For instance, as shown in the example of **Fig. 1****,** an incident ray 1300 entering the beam splitting assembly may be split into two emergent rays 1301 and 1302, respectively.

Notably, in the present example as shown in **Fig. 1****,** the first, second and third prisms 1101, 1102, 1103 are 90 degree prisms (in some cases may also be referred to as right angle prisms). More particularly, these prisms have apical angles (or sometimes referred to as apex angles) of 45 degrees. In other words, the base of each of the first, second and third (triangular) prisms 1101, 1102, 1103 forms the shape of a isosceles right triangle (or sometimes simply referred to as a 45°-45°-90° triangle). In such cases, the length of the hypotenuse of the base of the second (triangular) prism 1102 is twice the length of the cathetus (leg) of the base of the first or third (triangular) prism 1101, 1103. Notably, the length of the sides of the prisms may be as long as the horizontal field of view is supported by the lens assembly 1200 and/or the detecting assembly of the imaging system 100.

Configured as such, i.e., by selecting the 90 degree prisms, or more particularly, with apical angles of 45 degrees, the first, second and third prisms 1101, 1102, 1103 may be arranged (joined together) to form a (rectangular) cuboid (with the bases of the first, second and third prisms together forming a rectangular), thereby improving the compactness and stableness of the beam splitting assembly and at the same time making it relatively easy to manufacture.

The imaging system 100 further comprises a detecting assembly (e.g., with one or more detectors, and preferably, with two or more detectors). In particular, in the present example as shown in **Fig. 1****,** the beam splitting assembly comprises three detectors, namely a first (top) detector 1111, a second (central) detector 1112 and a third (bottom) detector 1113, to match the number of prisms of the beam splitting assembly. However, in some cases, the detecting assembly may require (and thus may comprise) only one or two detectors, depending on the target application(s). For instance, in some implementations, the detecting assembly may comprise only the first (top) detector 1111 and the second (central) detector 1112.

More particularly, the three detectors 1111, 1112, 1113 are arranged to each capture a respective one of the emergent rays. That is to say, due to the beam splitting assembly (i.e., the first to third prisms 1101, 1102, 1103 comprised therein), the incident ray (of light) entering the beam splitting assembly may be split into a plurality of (e.g., two) emergent rays (of light) exiting the respective prisms of the beam splitting assembly. Correspondingly, the first to third detectors 1111, 1112, 1113 may be arranged in such a manner that they are able to capture (receive) a respective emergent ray coming out of the respective prism. By way of example, the first detector 1111 may be arranged to receive the emergent ray 1301 exiting the first prism 1101 and the second detector 1112 may be arranged to receive the emergent ray 1302 exiting the second prism 1102. For this purpose, the detectors 1111, 1112, 1113 of the detecting assembly may typically be arranged on respective focal planes of the imaging system 100, as will be understood and appreciated by the skilled person. The detectors 1111, 1112, 1113 may be implemented in the form of any suitable optical, image or thermal sensors (detectors), or the like, depending on various requirements and/or target applications. Possible (but non-limiting) examples of such detector may be using CMOS or Micro-bolometer technology, or generally speaking, Focal Plane Array (FPA).

Configured as such, multi-spectral imaging could be accomplished for broad (thermal) spectrum without compromising the image quality and with no moving parts, thereby resulting in a more efficient, innovative and yet compact design of the imaging system that is well suited for applications like satellites (e.g., nanosatellites, such as CubeSats), or drones, etc. Furthermore, the movement of the satellite or drone itself may be used to have multi-spectral data of all points, for example by (successively) scanning or sweeping of the objects, as will be understood and appreciated by the skilled person.

Moreover, in the present example as shown in **Fig. 1****,** the imaging system 100 further comprises a total number of three filtering means 1121, 1122, 1123, to match the number of the prisms of the beam splitting means and the number of detectors in the detecting means. However, depending on various requirements and/or target applications, other number of filtering means may be used. The filtering means 1121, 1122, 1123 may be implemented in the form of bandpass filters, for example.

In particular, the filtering means 1121, 1122, 1123 may be arranged (configured) to filter a respective one of the emergent rays. In this sense, the filtering means 1121, 1122, 1123 may be transparent in a wavelength range (or a range of wavelength) of light or thermal radiation while be non-transparent in another (one or more) wavelength range(s) of light or thermal radiation. Put differently, the filtering means may allow choosing certain (e.g., desired) spectral band(s), by passing through a range of wavelength of light such that the passed-through light can be captured by the respective detector(s) of the detecting assembly; while blocking (e.g., filtering) other range(s) of wavelength of light. For this purpose, as shown in **Fig. 1****,** the filtering means 1121, 1122, 1123 are (typically) arranged in front of the respective detectors 1111, 1112, 1113, or to be more precise, between the respective prisms 1101, 1102, 1103 of the beam splitting assembly and the respective detectors 1111, 1112, 1113 of the detecting assembly.

Particularly, one filtering means (e.g., the top filtering means 1121) and another filtering means (e.g., the central filtering means 1122) may be transparent in different wavelength ranges. In other words, one filtering means (e.g., the top filtering means 1121) may be transparent in a certain wavelength range that is different (non-overlapping or in some cases partially overlapping) from the wavelength range of another filtering means (e.g., the central filtering means 1122). Configured as such, different ranges of wavelength of (the same) light or radiation can be filtered and eventually captured (collected) by the detectors at (essentially) the same time. In other words, optically matched locations of the pixels on different (e.g., two or three) detectors can be achieved. More particularly, there may be (at least) two bands of (optical) data received for each pixel, even when the system (e.g., the satellite or the drone) is moving, which is typically the case during practical operation. Furthermore, the third arm (e.g., the third/bottom prism 1103) of the beam splitting assembly may also be used for enabling enlarging the field of view by using the same tow bands received (e.g., by the top detector 1111 and the central detector 1112), as can be understood and appreciated by the skilled person. In such cases, both detectors (e.g., by the top detector 1111 and the central detector 1112) can see the same thermal noise emitted by the beam splitting assembly whose temperatures can be monitored (and modulated if required) from the two side mounting faces. Thereby, the overall efficiency and quality of the whole imaging system can be further improved.

In the present example as shown in **Fig. 1****,** the central detector 1112 is arranged on the optical axis of the imaging system 100. In some cases, the (central) filtering mean 1122 arranged in front of the central detector 1112 may itself comprise a (non-overlapping) first and second portions (e.g., located symmetrically with regard to the optical axis 1203). In particular, the first and second portions may be transparent in different wavelength ranges, similar as illustrated above with regard to the two filtering means having different wavelength ranges. In some other cases, the filtering means may not necessarily comprise the first and second portions (on the same filtering means), but may instead comprise a first and second sub-filtering means that may or may not be connected together, as will be understood and appreciated by the skilled person. By adding multi-zone filtering characteristics, additional spectral information can also be collected. In particular, configured as such, namely by exploiting the filtering means with portions (or sub-filtering meanings) having different operating wavelength ranges, different (e.g., two) spectrum bands of a pixel may be captured/collected using one single detector, during the course of sweeping/scanning of the object, thereby further improving the overall efficiency of the whole system. Of course, more than two (e.g., three) portions or sub-filtering means may also be theoretically achievable. However, trade-off(s), such as the increased complexity in manufacturing such filtering means and/or in the configuration or designing of the beam splitting means, may have to be well taken into account, as will be appreciated by the skilled person.

In some cases, one or more of the detectors 1111, 1112, 1113 of the detecting assembly may be selected based on (requirements of) sensitivity in a certain wavelength range. As will be understood and appreciated by the skilled person, such selection of the detector based on the sensitivity requirements in a particular wavelength range may be performed in addition to or as an alternative of the above illustrated provision of the filtering means.

Notably, in some cases, it is also (theoretically) possible that the apical angles (of the prisms) may not be 45 degrees or even the prisms themselves may not be 90 degree prisms. Consequently, in those cases, the detectors of the detecting assembly and/or the filtering means may need to be respectively arranged/tuned (e.g., shifted, tilted, etc.), e.g., in order to compensate the different optical characteristics caused by (e.g., the non-uniformity of) the prisms, as will be understood and appreciated by the skilled person.

Further to be noted, in some cases, one or more of the first, second and third prisms 1101, 1102, 1103 may be (or form) a dichroic prism. As will be understood and appreciated by the skilled person, a dichroic prism typically refers to a prism that can split light into two beams of different wavelength and is typically constructed with one or more (sub-)prisms with dichroic optical coatings at the interface that may selectively reflect or transmit light depending on the light's wavelength. That is, certain interfaces within the prism or formed by (sub-)prisms may act as dichroic filters. In this sense, such a dichroic prism may be seen as playing a role similar to, at least partially, that of a filtering means. Correspondingly, in some cases, the respective filtering means arranged in front of the detector might be omitted, if a dichroic prism were to be used.

As illustrated above, the imaging system 100 is typically used as a payload in a satellite or a drone, which is generally moving during operation. Thus, the imaging system 100, when used in practice, may be arranged in such a manner that it faces (e.g., substantially faces downwards) the (to-be-observed) object (pixels). Arranged as such, pixels of the object may be successively swept or scanned by fields of view of the (different) detectors in the detecting assembly. By way of example (without limitation), during the course of sweeping and scanning, the (original) incidental ray 1300 from a given pixel may move accordingly and become the incidental ray 1600 at some (later) point of time. In such cases, the incidental ray 1600 may then be split on the second interface 1152 and exit the third (bottom) prism 1103 as the emergent ray 1601 and the second (central) prism 1102 as the emergent ray 1602, which are then captured by the bottom detector 1113 and the central detector 1112, respectively. Consequently, different spectrum data captured/collected by the detectors may be compared and post-processed if necessary, as will be appreciated by the skilled person. Notably, configured as such, only geometric consideration (of the object) may be required to align different wavelength information, thereby resulting in a simple processing of the image. For instance, by analyzing (e.g., calculating) linear combinations of the readout signals from different detectors (that receive/capture radiation in different wavelength ranges), correction in errors caused by e.g., jitter or vibration of the satellite or drone, may be performed (e.g., with the help of software), thereby further improving the quality of the final image. For this purpose, the satellite or drone may further comprise suitable circuitry for reading out the data captured by the detecting assembly and/or for further processing (e.g., time synchronization, gain adjustment, and/or digital signal processing, etc.), if necessary.

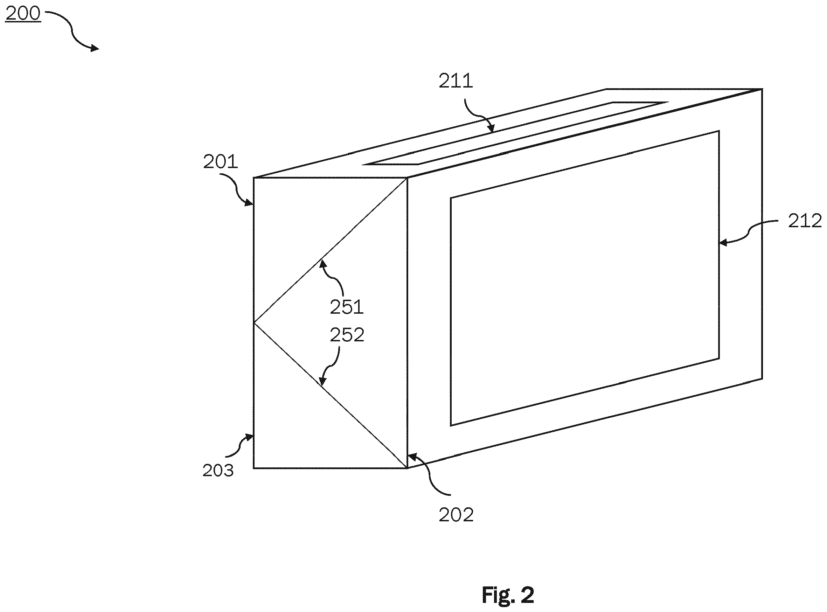

**Fig. 2** schematically illustrates an example of an imaging system 200 according to an embodiment of the present disclosure. The imaging system 200 may be seen as a collective combination 1100 of the beam splitting assembly, the detecting assembly and optionally the filtering means as shown in the imaging system 100 of **Fig. 1****.** Therefore, repeated description of analogous or similar components of the imaging system may be omitted for the sake of conciseness. In particular, **Fig. 2** schematically represents an oblique (projection) view of the imaging system 200.

In the present example as shown in **Fig. 2****,** the beam splitting assembly is made up of a (bigger) monolithic 90 degree prism 202 whose sides are joined (e.g., cemented) to the hypotenuses of two (smaller) monolithic 90 degree prisms 201, 203 at respective interfaces 251, 252. The two smaller prisms 201, 203 may be of the same size. As illustrated above, the three prisms 201, 202, 203 may be made of same material. In some special cases, it may also be (theoretically) possible that the two smaller prisms 201, 203 are made of a monolithic part (i.e., forming one single piece instead of two separated prisms). However, manufacturing of such single-pieced prism may be generally considered to be rather difficult and the optical characteristics of such prism may be somewhat compromised (e.g., at the corner where the tips of the small prisms meet). As illustrated above, the first and second interfaces 251, 252 may transmits 50% (or other values) of light and reflects the rest, depending on various requirements and/or implementations. The transmitted light (emergent ray) then reaches a so-called (central) filter-detector assembly 212 and the top reflected light (emergent ray) reaches the other (top) filter-detector assembly 211. Of course, in a similar manner, the emergent light exiting the (bottom) prism 203 may be captured by another (bottom) filter-detector assembly (not shown in **Fig. 2**), as will be understood and appreciated by the skilled person.

Notably, here the so-called filter-detector assemblies 211, 212 are merely for the purpose of illustration and should in no way limiting the actual implementation of such filter-detector assemblies. By way of example, as can be understood and appreciated by the skilled person, the filter-detector assembly 212 in **Fig. 2** may well be implemented for example by using the detector 1112 and, if necessary (e.g., depending on whether the detector itself has wavelength sensitivity or not), in combination with the filtering means 1122 as shown in **Fig. 1****.** The detector 1112 and the filtering means 1122 may then be connected/joined (e.g., glued) together to form a single piece of filter-detector assembly, or may be two stand-alone components.

Moreover, in some cases, the filter-detector assemblies 211, 212 may also be joined (e.g., glued or by any other suitable means) with the respective sides of the prisms 201, 202, 203. Arranged as such, compactness of the imaging system 200 may be (further) improved. In some other cases, the filter-detector assemblies 211, 212 may be placed at a distance to the respective sides of the prisms 201, 202, 203, as will be understood and appreciated by the skilled person.

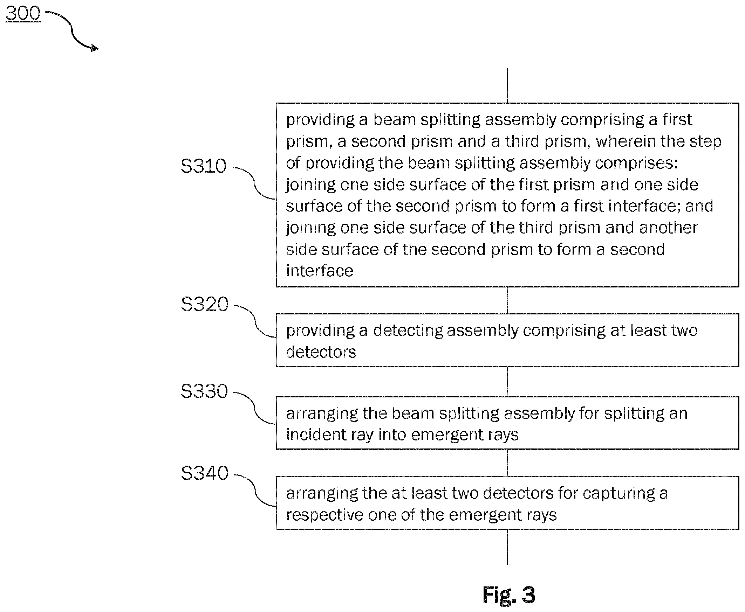

**Fig. 3** is a flowchart schematically illustrating a method 300 of manufacturing an imaging system according to an embodiment of the present disclosure. The method 300 comprises, at step S310, providing a beam splitting assembly comprising a first prism, a second prism and a third prism. In particular, the step of providing the beam splitting assembly comprises (a sub-step of) joining one side surface of the first prism and one side surface of the second prism to form a first interface and (a sub-step of) joining one side surface of the third prism and another side surface of the second prism to form a second interface.

The method 300 further comprises, at step S320, providing a detecting assembly comprising at least two detectors.

Subsequently, at step S330, the method 300 comprises arranging the beam splitting assembly for splitting an incident ray into emergent rays.

Finally, at step S340, the method 300 comprises arranging the at least two detectors for capturing a respective one of the emergent rays.

## Claims

1. An imaging system (100) comprising:
a beam splitting assembly for splitting an incident ray into emergent rays; and
a detecting assembly,
wherein the beam splitting assembly comprises a first prism (1101), a second prism (1102) and a third prism (1103);
wherein one side surface of the first prism (1101) and one side surface of the second prism (1102) are joined to form a first interface (1151);
wherein one side surface of the third prism (1103) and another side surface of the second prism (1102) are joined to form a second interface (1152);
wherein the detecting assembly comprises at least two detectors; and
wherein the at least two detectors are arranged to each capture a respective one of the emergent rays,
the first, second and third prisms (1101, 1102, 1103) are 90 degree prisms; and **characterized in that**
the hypotenuse side surfaces of the first and third prisms (1101, 1103) are joined to the respective cathetus side surfaces of the second prism (1102) at the first and second interfaces (1151, 1152).

2. The imaging system (100) according to claim 1, wherein the imaging system (100) further comprises at least one filtering means arranged to filter a respective one of the emergent rays; and
wherein the filtering means is transparent in a wavelength range.

3. The imaging system (100) according to claim 1 or claim 2, wherein the imaging system (100) comprises at least two filtering means; and
wherein the at least two filtering means are transparent in different wavelength ranges.

4. The imaging system (100) according to any one of the preceding claims, wherein the detecting assembly comprises a central detector (1112) arranged on the optical axis of the imaging system (100).

5. The imaging system (100) according to claim 4, wherein a filtering means is arranged in front of the central detector (1112) and comprises a first portion and a second portion; and wherein the first and second portions are transparent in different wavelength ranges.

6. The imaging system (100) according to any one of the preceding claims, wherein one of the at least two detectors is selected based on sensitivity in a certain wavelength range.

7. The imaging system (100) according to any one of the preceding claims, wherein each of the first, second and third prisms (1101, 1102, 1103) has apical angles of 45 degrees.

8. The imaging system (100) according to any one of the preceding claims, wherein the at least two detectors are arranged on respective focal planes of the imaging system (100).

9. The imaging system (100) according to any one of the preceding claims, wherein the first and second interfaces (1151, 1152) each has a reflectivity index of 50%.

10. The imaging system (100) according to any one of the preceding claims, wherein at least one of the first, second and third prisms (1101, 1102, 1103) is a dichroic prism.

11. The imaging system (100) according to any one of the preceding claims, wherein the first, second and third prisms (1101, 1102, 1103) have the same index of refraction.

12. The imaging system (100) according to any one of the preceding claims, further comprising a lens assembly (1200) arranged to guide incident radiation to the beam splitting assembly.

13. An apparatus comprising the imaging system (100) according to any one of the preceding claims.

14. The apparatus according to claim 13, wherein the apparatus forms part of a satellite or a drone.

15. A method (300) for manufacturing an imaging system (100) comprising:
providing (S310) a beam splitting assembly comprising a first prism (1101), a second prism (1102) and a third prism (1103);
providing (S320) a detecting assembly comprising at least two detectors,
arranging (S330) the beam splitting assembly for splitting an incident ray into emergent rays; and
arranging (S340) the at least two detectors for capturing a respective one of the emergent rays,
wherein the step of providing the beam splitting assembly comprises:
joining one side surface of the first prism (1101) and one side surface of the second prism (1102) to form a first interface (1151); and
joining one side surface of the third prism (1103) and another side surface of the second prism (1102) to form a second interface (1152),
wherein
the first, second and third prisms (1101, 1102, 1103) are 90 degree prisms; and **characterized in that**
the step of providing the beam splitting assembly further comprises: joining the hypotenuse side surfaces of the first and third prisms (1101, 1103) to the respective cathetus side surfaces of the second prism (1102) at the first and second interfaces (1151, 1152).

## Patentansprüche

1. Bildgebungssystem (100), das Folgendes umfasst:
eine Strahlteilungsanordnung zum Teilen eines einfallenden Strahls in austretende Strahlen; und
eine Detektionsanordnung,
wobei die Strahlteilungsanordnung ein erstes Prisma (1101), ein zweites Prisma (1102) und ein drittes Prisma (1103) umfasst;
wobei eine Seitenfläche des ersten Prismas (1101) und eine Seitenfläche des zweiten Prismas (1102) verbunden sind, um eine erste Schnittstelle (1151) zu bilden;
wobei eine Seitenfläche des dritten Prismas (1103) und eine andere Seitenfläche des zweiten Prismas (1102) verbunden sind, um eine zweite Schnittstelle (1152) zu bilden,
wobei die Detektionsanordnung mindestens zwei Detektoren umfasst; und
wobei die mindestens zwei Detektoren so angeordnet sind, dass sie jeweils einen jeweiligen der austretenden Strahlen auffangen,
wobei das erste, das zweite und das dritte Prisma (1101, 1102, 1103) 90-Grad-Prismen sind;
**dadurch gekennzeichnet, dass**
die Hypotenusenseitenflächen des ersten und des dritten Prismas (1101, 1103) mit den jeweiligen Kathetenseitenflächen des zweiten Prismas (1102) an der ersten und der zweiten Schnittstelle (1151, 1152) verbunden sind.

2. Bildgebungssystem (100) nach Anspruch 1, wobei das Bildgebungssystem (100) ferner mindestens ein Filtermittel umfasst, das ausgelegt ist, einen jeweiligen der austretenden Strahlen zu filtern; und
wobei die Filtermittel in einem Wellenlängenbereich transparent sind.

3. Bildgebungssystem (100) nach Anspruch 1 oder Anspruch 2, wobei das Bildgebungssystem (100) mindestens zwei Filtermittel umfasst; und
wobei die mindestens zwei Filtermittel in verschiedenen Wellenlängenbereichen transparent sind.

4. Bildgebungssystem (100) nach einem der vorhergehenden Ansprüche, wobei die Detektionsanordnung einen zentralen Detektor (1112) umfasst, der auf der optischen Achse des Bildgebungssystems (100) angeordnet ist.

5. Bildgebungssystem (100) nach Anspruch 4, wobei ein Filtermittel vor dem zentralen Detektor (1112) angeordnet ist und einen ersten Teil und einen zweiten Teil umfasst; und wobei der erste und der zweite Teil in verschiedenen Wellenlängenbereichen transparent sind.

6. Bildgebungssystem (100) nach einem der vorhergehenden Ansprüche, wobei einer der mindestens zwei Detektoren anhand einer Empfindlichkeit in einem bestimmten Wellenlängenbereich ausgewählt wird.

7. Bildgebungssystem (100) nach einem der vorhergehenden Ansprüche, wobei jedes des ersten, des zweiten und des dritten Prismas (1101, 1102, 1103) einen Scheitelwinkel von 45 Grad aufweist.

8. Bildgebungssystem (100) nach einem der vorhergehenden Ansprüche, wobei die mindestens zwei Detektoren auf jeweiligen Brennebenen des Bildgebungssystems (100) angeordnet sind.

9. Bildgebungssystem (100) nach einem der vorhergehenden Ansprüche, wobei die erste und die zweite Schnittstelle (1151, 1152) jeweils einen Reflexionsindex von 50 % besitzen.

10. Bildgebungssystem (100) nach einem der vorhergehenden Ansprüche, wobei mindestens eines des ersten, des zweiten und des dritten Prismas (1101, 1102, 1103) ein dichroitisches Prisma ist.

11. Bildgebungssystem (100) nach einem der vorhergehenden Ansprüche, wobei das erste, das zweite und das dritte Prisma (1101, 1102, 1103) denselben Brechungsindex besitzen.

12. Bildgebungssystem (100) nach einem der vorhergehenden Ansprüche, das ferner eine Linsenanordnung (1200) umfasst, die ausgelegt ist, eine einfallende Strahlung zu der Strahlteilungsanordnung zu lenken.

13. Vorrichtung, die das Bildgebungssystem (100) nach einem der vorhergehenden Ansprüche umfasst.

14. Vorrichtung nach Anspruch 13, wobei die Vorrichtung einen Teil eines Satelliten oder einer Drohne bildet.

15. Verfahren (300) zum Herstellen eines Bildgebungssystems (100), das umfasst:
Bereitstellen (S301) einer Strahlteilungsanordnung, die ein erstes Prisma (1101), ein zweites Prisma (1102) und ein drittes Prisma (1103) umfasst;
Bereitstellen (S320) einer Detektionsanordnung, die mindestens zwei Detektoren umfasst,
Anordnen (S330) der Strahlteilungsanordnung zum Teilen eines einfallenden Strahls in austretende Strahlen; und
Anordnen (S340) der mindestens zwei Detektoren, um einen jeweiligen der austretenden Strahlen aufzufangen,
wobei der Schritt des Bereitstellens der Strahlteilungsanordnung Folgendes umfasst:
Verbinden einer Seitenfläche des ersten Prismas (1101) und einer Seitenfläche des zweiten Prismas (1102), um eine erste Schnittstelle (1151) zu bilden; und
Verbinden einer Seitenfläche des dritten Prismas (1103) und einer anderen Seitenfläche des zweiten Prismas (1102), um eine zweite Schnittstelle (1152) zu bilden,
wobei das erste, das zweite und das dritte Prisma (1101, 1102, 1103) 90-Grad-Prismen sind;
**dadurch gekennzeichnet, dass**
der Schritt des Bereitstellens der Strahlteilungsanordnung ferner umfasst: Verbinden der Hypotenusenseitenflächen des ersten und des dritten Prismas (1101, 1103) mit den jeweiligen Kathetenseitenflächen des zweiten Prismas (1102) an der ersten und der zweiten Schnittstelle (1151, 1152).

## Revendications

1. Système d'imagerie (100) comprenant :
un ensemble de séparation de faisceau pour séparer un rayon incident en rayons émergents ; et
un ensemble de détection,
dans lequel l'ensemble de séparation de faisceau comprend un premier prisme (1101), un deuxième prisme (1102) et un troisième prisme (1103) ;
dans lequel une surface latérale du premier prisme (1101) et une surface latérale du deuxième prisme (1102) sont reliées pour former une première interface (1151) ;
dans lequel une surface latérale du troisième prisme (1103) et une autre surface latérale du deuxième prisme (1102) sont reliées pour former une deuxième interface (1152) ;
dans lequel l'ensemble de détection comprend au moins deux détecteurs ; et
dans lequel les au moins deux détecteurs sont agencés pour capturer chacun un respectif des rayons émergents,
les premier, deuxième et troisième prismes (1101, 1102, 1103) sont des prismes à 90° ; et
**caractérisé en ce que** les surfaces latérales d'hypoténuse des premier et troisième prismes (1101, 1103) sont reliées aux surfaces latérales de cathète respectives du deuxième prisme (1102) au niveau des première et deuxième interfaces (1151, 1152).

2. Système d'imagerie (100) selon la revendication 1, dans lequel le système d'imagerie (100) comprend en outre au moins un moyen de filtration agencé pour filtrer un respectif des rayons émergents ; et
dans lequel le moyen de filtration est transparent dans une plage de longueurs d'onde.

3. Système d'imagerie (100) selon la revendication 1 ou revendication 2, dans lequel le système d'imagerie (100) comprend au moins deux moyens de filtration ; et
dans lequel les au moins deux moyens de filtration sont transparents dans différentes plages de longueurs d'onde.

4. Système d'imagerie (100) selon l'une quelconque des revendications précédentes, dans lequel l'ensemble de détection comprend un détecteur central (1112) agencé sur l'axe optique du système d'imagerie (100).

5. Système d'imagerie (100) selon la revendication 4, dans lequel un moyen de filtration est agencé devant le détecteur central (1112) et comprend une première partie et une deuxième partie ; et dans lequel les première et deuxième parties sont transparentes dans différentes plages de longueurs d'ondes.

6. Système d'imagerie (100) selon l'une quelconque des revendications précédentes, dans lequel l'un des au moins deux détecteurs est sélectionné sur la base de la sensibilité dans une certaine plage de longueurs d'onde.

7. Système d'imagerie (100) selon l'une quelconque des revendications précédentes, dans lequel chacun des premier, deuxième et troisième prismes (1101, 1102, 1103) présente des angles au sommet de 45 degrés.

8. Système d'imagerie (100) selon l'une quelconque des revendications précédentes, dans lequel les au moins deux détecteurs sont agencés sur des plans focaux respectifs du système d'imagerie (100).

9. Système d'imagerie (100) selon l'une quelconque des revendications précédentes, dans lequel les première et deuxième interfaces (1151, 1152) présentent chacune un indice de réflectivité de 50 %.

10. Système d'imagerie (100) selon l'une quelconque des revendications précédentes, dans lequel au moins l'un des premier, deuxième et troisième prismes (1101, 1102, 1103) est un prisme dichroïque.

11. Système d'imagerie (100) selon l'une quelconque des revendications précédentes, dans lequel les premier, deuxième et troisième prismes (1101, 1102, 1103) présentent le même indice de réfraction.

12. Système d'imagerie (100) selon l'une quelconque des revendications précédentes, comprenant en outre un ensemble de lentille (1200) agencé pour guider un rayonnement incident vers l'ensemble de séparation de faisceau.

13. Appareil comprenant le système d'imagerie (100) selon l'une quelconque des revendications précédentes.

14. Appareil selon la revendication 13, dans lequel l'appareil fait partie d'un satellite ou d'un drone.

15. Procédé (300) pour fabriquer un système d'imagerie (100) comprenant :
la fourniture (S310) d'un ensemble de séparation de faisceau comprenant un premier prisme (1101), un deuxième prisme (1102) et un troisième prisme (1103) ;
la fourniture (S320) d'un ensemble de détection comprenant au moins deux détecteurs,
l'agencement (S330) de l'ensemble de séparation de faisceau pour séparer un rayon incident en rayons émergents ; et
l'agencement (S340) des au moins deux détecteurs pour capturer un respectif des rayons émergents,
dans lequel l'étape de fourniture de l'ensemble de séparation de faisceau comprend :
la liaison d'une surface latérale du premier prisme (1101) et d'une surface latérale du deuxième prisme (1102) pour former une première interface (1151) ; et
la liaison d'une surface latérale du troisième prisme (1103) et d'une autre surface latérale du deuxième prisme (1102) pour former une deuxième interface (1152),
dans lequel les premier, deuxième et troisième prismes (1101, 1102, 1103) sont des prismes de 90 degrés ; et
**caractérisé en ce que**
l'étape de fourniture de l'ensemble de séparation de faisceau comprend en outre : la liaison des surfaces latérales d'hypoténuse des premier et troisième prismes (1101, 1103) aux surfaces latérales de cathète respectives du deuxième prisme (1102) au niveau des première et deuxième interfaces (1151, 1152).
